# EUROPÄISCHE PATENTANMELDUNG

(11) **EP 1 258 291 A2**
(43) Veröffentlichungstag der Anmeldung: **20.11.2002**
(21) Anmeldenummer: 02009222.7
(22) Anmeldetag: 25.04.2002
(51) Int. Cl.: B01J 27/26, C08G 65/26, C08G 65/10, B01J 31/16

(54) **Doppelmetallcyanid-Katalysatoren für die Herstellung von Polyetherpolyolen**

(30) Priorität: 07.05.2001 DE 10122020
(71) Anmelder: Bayer Aktiengesellschaft, 51368 Leverkusen (DE)
(72) Erfinder: Ooms, Pieter, Dr., 47800 Krefeld (DE); Hoffmann, Jörg, Dr., 47829 Krefeld (DE); Schäfer, Walter, Dr., 42799 Leichlingen (DE)

(57) **Zusammenfassung**

Die Erfindung betrifft neue Doppelmetallcyanid(DMC)-Katalysatoren für die Herstellung von Polyetherpolyolen durch Polyaddition von Alkylenoxiden an aktive Wasserstoffatome aufweisende Starterverbindungen, wobei der Katalysator Doppelmetallcyanid-Verbindungen, organische Komplexliganden und zwei unterschiedliche komplexbildende Komponenten aus den Verbindungsklassen der funktionalisierten Polymere, Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionischen oberflächen- bzw. grenzflächenaktiven Verbindungen enthält.

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe z.B. US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines organischen Komplexliganden, z.B. eines Ethers, umsetzt. In einer typischen Katalysatorpräparation werden beispielsweise wässrige Lösungen von Zinkchlorid (im Überschuss) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ x ZnCl₂ yH₂O z Glyme

erhalten (siehe z.B. EP-A 700 949).

Aus JP-A 4 145 123, US-A 5 470 813, EP-A 700 949, EP-A 743 093, EP-A 761 708 und WO 97/40086 sind DMC-Katalysatoren bekannt, die durch Einsatz von tert.-Butanol als organischem Komplexliganden (allein oder in Kombination mit einem Polyether (EP-A 700 949, EP-A 761 708, WO 97/40086)) den Anteil an monofunktionellen Polyethern mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

Aufgabe der vorliegenden Erfindung war es, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen erhöhte Katalysatoraktivität aufweisen. Dies führt durch Verkürzung der Alkoxylierungszeiten zu einer verbesserten Wirtschaftlichkeit des Herstellprozesses von Polyetherpolyolen. Idealerweise kann durch die erhöhte Aktivität der Katalysator dann in so geringen Konzentrationen (25 ppm oder weniger) eingesetzt werden, dass die sehr aufwendige Katalysatorabtrennung aus dem Produkt nicht mehr notwendig ist, und das Produkt direkt zur Polyurethan-Herstellung verwendet werden kann.

Überraschend wurde jetzt gefunden, dass DMC-Katalysatoren, die zwei oder mehrere unterschiedliche komplexbildende Komponenten enthalten, bei der Polyetherpolyol-Herstellung stark erhöhte Aktivität besitzen in Vergleich mit Katalysatoren, die nur eine komplexbildende Komponente enthalten.

Gegenstand der vorliegenden Erfindung ist daher ein Doppelmetallcyanid (DMC)-Katalysator, enthaltend
a) eine oder mehrere, vorzugsweise eine Doppelmetallcyanid-Verbindung,
b) einen organischen Komplexliganden, der weder ein Polyether, Polyester, Polycarbonat, Polyalkylenglykolsorbitanester, Polyalkylenglykolglycidylether, Polyacrylamid, eine Poly(acrylamid-co-acrylsäure), Polyacrylsäure, Poly(acrylsäure-co-maleinsäure), ein Polyacrylnitril, Polyalkylacrylat, Polyalkylmethacrylat, Polyvinylmethylether, Polyvinylethylether, Polyvinylacetat, Polyvinylalkohol, Poly-N-vinylpyrrolidon, eine Poly(N-vinylpyrrolidon-coacrylsäure), ein Polyvinylmethylketon, Poly(4-vinylphenol), Poly(acrylsäureco-styrol), Oxazolinpolymer, Polyalkylenimin, Maleinsäure- oder Maleinsäureanhydridcopolymer, eine Hydroxyethylcellulose, ein Polyacetal, Glycidylether, Glycosid, Carbonsäureester mehrwertiger Alkohole, eine Gallensäure oder ein Gallensäuresalz, Gallensäureeste oder Gallensäureamid, Cyclodextrin, eine Phosphorverbindung, ein α,β-ungesättigter Carbonsäureester noch eine ionische oberflächen- bzw. grenzflächenaktive Verbindungen ist,
c) zwei unterschiedliche komplexbildende Komponenten, ausgewählt jeweils aus der Gruppe umfassend: Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetale, Glycidylether, Glycoside, Carbonsäureester mehrwertiger Alkohole, Gallensäuren und deren Salze, Ester oder Amide, Cyclodextrine, Phosphorverbindungen, α,β-ungesättigte Carbonsäureester und ionische oberflächen- bzw. grenzflächenaktive Verbindungen, wobei jede Komponente einer anderen Verbindungsklasse aus der genannten Gruppe angehört.

In dem erfindungsgemäßen Katalysator können gegebenenfalls d) Wasser, vorzugsweise 1 bis 10 Gew.-% und/oder e) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)-bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Die Kationen Y sind gleich oder verschieden, vorzugsweise gleich, und werden ausgewählt aus der Alkalimetallionen und Erdalkalimetallionen umfassenden Gruppe. Die Anionen A sind gleich oder verschieden, vorzugsweise gleich, und werden ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a als auch b und c sind ganzzahlig, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z},

worin M wie in Formel (I) und
M' wie in Formel (II) definiert ist, und
x, x', y und z ganzzahlig und so gewählt sind, dass die Elektroneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 zu entnehmen. Besonders bevorzugt verwendet wird Zinkhexacyanocobaltat(III).

Die in den erfindungsgemäßen DMC-Katalysatoren enthaltenen organischen Komplexliganden b) sind im Prinzip bekannt und ausführlich im Stand der Technik beschrieben (beispielsweise in US-A 5 158 922, US-A 3 404 109, US-A 3 829 505, US-A 3 941 849, EP-A 700 949, EP-A 761 708, JP-A 4 145 123, US-A 5 470 813, EP-A 743 093 und WO 97/40086). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Der organische Komplexligand wird entweder während der Katalysatorpräparation zugegeben oder unmittelbar nach der Ausfällung der Doppelmetallcyanidverbindung a). Gewöhnlich wird der organische Komplexligand im Überschuss eingesetzt.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%, bezogen auf die Menge des fertigen Katalysators, und die organischen Komplexliganden b) in Mengen von 0,5 bis 30 Gew.-%, bevorzugt 1 bis 25 Gew.-%, bezogen auf die Menge des fertigen Katalysators. Die erfindungsgemäßen DMC-Katalysatoren enthalten üblicherweise 1 bis 80 Gew.-%, bevorzugt 1 bis 40 Gew.-%, bezogen auf die Menge des fertigen Katalysators, einer Mischung der komplexbildenden Komponenten c).

Für die Herstellung der erfindungsgemäßen Katalysatoren geeignete komplexbildende Komponenten c) sind die zuvor genannten funktionalisierten Polymere, Glycidylether, Glycoside, Carbonsäureester mehrwertiger Alkohole, Gallensäuren oder deren Salze, Ester oder Amide, Cyclodextrine, Phosphorverbindungen, α,β-ungesättigte Carbonsäureester oder ionische oberflächen- bzw. grenzflächenaktive Verbindungen .

Für die Herstellung der erfindungsgemäßen Katalysatoren als Komponente c) geeignete funktionalisierte Polymere sind im Prinzip bekannt und ausführlich beschrieben in EP-A700949, WO 97/40086, WO 98/16310, und den deutschen Patentanmeldungen 197 45 120.9, 197 57 574.9, 198 10 269.0, 198 34 573.9 und 198 42 382.9. Geeignete funktionalisierte Polymere sind z.B. Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale.

Bevorzugt eingesetzte funktionalisierte Polymere sind Polyether, Polyester, Polycarbonate, Polyalkylenglykolsorbitanester und Polyalkylenglykolglycidylether.

Bevorzugt in Komponente c) eingesetzte Polyether sind Polyetherpolyole mit Hydroxyfunktionalitäten von 1 bis 8, besonders bevorzugt von 1 bis 3, und zahlenmittleren Molekulargewichten zwischen 150 und 10⁷, besonders bevorzugt zwischen 200 und 5·10⁴. Sie werden in der Regel durch Ringöffnungspolymerisation von Epoxiden in Gegenwart entsprechender aktive Wasserstoffatome aufweisende Starterverbindungen unter basischer, saurer oder koordinativer Katalyse (z.B. DMC-Katalyse) erhalten. Geeignete Polyetherpolyole sind z.B. Poly(oxypropylen)polyole, Poly(oxyethylen)polyole, EO-getippte Poly(oxypropylen)polyole, gemischte EO/PO-Polyole, Butylenoxid-Polymere, Butylenoxidcopolymere mit Ethylenoxid und/oder Propylenoxid und Poly(oxytetramethylen)glykole

Bevorzugt in Komponente c) eingesetzte Polyester sind Hydroxy-Endgruppen aufweisende lineare und teilverzweigte Polyester mit mittleren Molmassen unterhalb 10000, die in der deutschen Patentanmeldung 197 45 120.9 genauer beschrieben sind. Besonders bevorzugt eingesetzt werden Polyester mit mittleren Molmassen von 400 bis 6000 und OH-Zahlen von 28 bis 300 mg KOH/g, die für die Herstellung von Polyurethanen geeignet sind. Geeignete Polyester sind z.B. Poly(ethylenglykoladipat), Poly(diethylenglykol-adipat), Poly(dipropylenglykol-adipat), mit Trimethylolpropan verzweigtes Poly(diethylenglykol-adipat), Poly(tetramethylenglykol-adipat) oder Poly(2-methyl-1,3-propylenglutarat).

Bevorzugt in Komponente c) eingesetzte Polycarbonate sind Hydroxy-Endgruppen aufweisende aliphatische Polycarbonate mit mittleren Molmassen unterhalb 12000, die in der deutschen Patentanmeldung 197 57 574.9 genauer beschrieben sind. Besonders bevorzugt eingesetzt werden aliphatische Polycarbonat-Diole mit mittleren Molmassen von 400 bis 6000. Geeignete Polycarbonat-Diole sind z.B. Poly(1,6-hexandiol)carbonat, Poly(diethylenglykol)carbonat, Poly(dipropylenglykol)-carbonat, Poly(triethylenglykol)carbonat, Poly(1,4-bishydroxymethylcyclohexan)-carbonat, Poly(1,4-butandiol)carbonat oder Poly(tripropylenglykol)carbonat.

Bevorzugt in Komponente c) eingesetzte Polyalkylenglykolsorbitanester sind Polyethylenglykolsorbitanester (Polysorbate), die in EP 1 115 489 (WO 00/15 336) genauer beschrieben sind. Besonders bevorzugt sind Polyethylenglykolsorbitanmono-, -di- und -triester von Fettsäuren mit 6 bis 18 C-Atomen und 2 bis 40 Mol Ethylenoxid.

Bevorzugt in Komponente c) eingesetzte Polyalkylenglykolglycidylether sind Monound Diglycidylether von Polypropylenglykol und Polyethylenglykol, die in der deutschen Patentanmeldung 198 34 573.9 genauer beschrieben sind.

Weiterhin bevorzugt für die Herstellung der erfindungsgemäßen Katalysatoren geeignet (Komponente c)) sind Glycidylether von monomeren oder polymeren (mit mindestens zwei Monomereinheiten) aliphatischen, aromatischen oder araliphatischen, mono-, di-, tri-, tetra- oder polyfunktionellen Alkoholen.

Bevorzugt sind Glycidylether von mono-, di-, tri-, tetra- oder polyfunktionellen aliphatischen Alkoholen wie Butanol, Hexanol, Octanol, Decanol, Dodecanol, Tetradecanol, Ethandiol, 1,2-Propandiol, 1,3-Propandiol, 1,4-Butandiol, 2,2-Dimethyl-1,3-propandiol, 1,2,3-Propantriol, 1,6-Hexandiol, 1,1,1-Tris(hydroxymethyl)ethan, 1,1,1-Tris(hydroxymethyl)propan, Tetrakis(hydroxymethyl)methan, Sorbit, Polyethylenglykol und Polypropylenglykol, wobei sowohl Mono-, Di-, Tri-, Tetra- als auch Polyether in Frage kommen.

Besonders bevorzugt eingesetzt werden Mono- oder Diglycidylether von Butanol, Hexanol, Octanol, Decanol, Dodecanol, Tetradecanol, Ethandiol oder 1,4-Butandiol sowie Polypropylenglykol oder Polyethylenglykol, insbesondere mit Polymerisationsgraden von 2 bis 1000 Monomereinheiten.

Die Glycidylether werden in der Regel durch Reaktion von mono-, di-, tri-, tetraoder polyfunktionellen Alkoholen mit Epichlorhydrin in Gegenwart einer LewisSäure wie beispielsweise Zinntetrachlorid oder Bortrifluorid zu den entsprechenden Chlorhydrinen und anschließende Dehydrohalogenierung mit Base (z.B. Natriumhydroxid) erhalten.

Methoden zur Herstellung von Glycidylethern sind allgemein gut bekannt und beispielsweise ausführlich beschrieben in "Kirk-Othmer, Encyclopedia of Chemical Technology", Band 9, 4. Auflage, 1994, S. 739 ff. und "Ullmann, Encyclopedia of Industrial Chemistry", Band A9, 5. Auflage, Weinheim/New York, 1987, S. 552.

Der zur Herstellung des erfindungsgemäßen Katalysators verwendete Glycidylether kann im fertigen Katalysator in der ursprünglich eingesetzten Form vorliegen oder auch in chemisch veränderter, z.B. hydrolysierter Form.

Geeignete Glycoside für Komponente c) sind Verbindungen aufgebaut aus Kohlenhydraten (Zuckern) und Nichtzuckern (Aglykone), in denen das Aglykon durch ein Sauerstoff-Atom über eine glykosidische Bindung mit einem Halbacetal-C-Atom des Kohlenhydrats zum Vollacetal gebunden ist.

Als Zuckerkomponente geeignet sind Monosaccharide wie Glucose, Galactose, Mannose, Fructose, Arabinose, Xylose oder Ribose, Disaccharide wie Saccharose oder Maltose und Oligo- oder Polysaccharide wie Stärke.

Als Nichtzuckerkomponente kommen C₁-C₃₀-Kohlenwasserstoffreste wie Aryl-, Aralkyl- und Alkylreste, bevorzugt Aralkyl- und Alkylreste, besonders bevorzugt Alkylreste mit 1 bis 30 C-Atomen in Frage.

Bevorzugt eingesetzte Glycoside sind die sogenannten Alkylpolyglycoside, die in der Regel durch Reaktion von Kohlenhydraten mit Alkoholen wie Methanol, Ethanol, Propanol und Butanol oder durch Umacetalisierung von kurzkettigen Alkylglycosiden mit Fettalkoholen mit 8 bis 20 C-Atomen in Gegenwart von Säuren erhalten werden.

Besonders bevorzugt sind Alkylpolyglycoside mit Glucose als wiederkehrender Einheit in der Kette, mit Alkylkettenlängen von C₈ bis C₁₆ und mittleren Polymerisationsgraden zwischen 1 und 2.

Methoden zur Herstellung von Glycosiden sind allgemein gut bekannt und beispielsweise ausführlich beschrieben in "Kirk-Othmer, Encyclopedia of Chemical Technology", Band 4, 4. Auflage, 1992, S. 916 ff.; "Römpp, Lexikon Chemie", Band 2, 10.

Auflage, Stuttgart/New York, 1996 S.1581 ff.; Angewandte Chemie 110, S. 1394-1412 (1998).

Geeignete Carbonsäureester mehrwertiger Alkohole für Komponente c) sind z.B. Ester von C₂-C₃₀-Carbonsäuren mit aliphatischen oder alicyclischen Alkoholen mit zwei oder mehr Hydroxylgruppen pro Molekül wie Ethylenglykol, 1,2-Propandiol, 1,3-Propandiol, Diethylenglykol, Triethylenglykol, 1,2,3-Propantriol (Glycerin), 1,3-Butandiol, 1,4-Butandiol, Butantriol, 1,6-Hexandiol, 1,1,1-Trimethylolethan, 1,1,1-Trimethylol-propan, Pentaerythrit, Kohlenhydraten (Zuckern) oder Zuckeralkohole wie Sorbit oder Sorbitan. Als Zucker geeignet sind Monosaccharide wie Glucose, Galactose, Mannose, Fructose, Arabinose, Xylose oder Ribose, Disaccharide wie Saccharose oder Maltose und Oligo- oder Polysaccharide wie Stärke.

Als Carbonsäurekomponente kommen z.B. in Frage C₂-C₃₀-Carbonsäuren wie Aryl-, Aralkyl- und Alkylcarbonsäuren, bevorzugt Aralkyl- und Alkylcarbonsäuren, besonders bevorzugt Alkylcarbonsäuren wie Essigsäure, Buttersäure, Isovaleriansäure, Capronsäure, Caprylsäure, Caprinsäure, Laurinsäure, Myristinsäure, Palmitinsäure, Stearinsäure, Ölsäure, Linolsäure oder Linolensäure.

Bevorzugt eingesetzte Carbonsäureester mehrwertiger Alkohole sind Ester von 1,2,3-Propantriol (Glycerin), 1,1,1-Trimethylolpropan, Pentaerythrit, Maltose oder Sorbitan mit C₂-C₁₈-Alkylcarbonsäuren.

Besonders bevorzugte Carbonsäureester mehrwertiger Alkohole sind Mono-, Di-, Tri- oder Tetraester von 1,2,3-Propantriol (Glycerin), Pentaerythrit oder Sorbitan mit C₂-C₁₈-Alkylcarbonsäuren.

Methoden zur Herstellung von Carbonsäureestern mehrwertiger Alkohole oder deren Isolierung aus Fetten sind allgemein gut bekannt und beispielsweise ausführlich beschrieben in "Kirk-Othmer, Encyclopedia of Chemical Technology", Band 9, 3. Auflage, 1980, S. 795 ff.; "Römpp, Lexikon Chemie", 8. Auflage, Stuttgart/New York, 1981; "Ullmann's Encyclopedia of Industrial Chemistry", Volume A10, 5 th Edition, 1987, S. 173 bis 218.

Geeignete Gallensäuren für Komponente c) sind C₂₄-Steroid-Carbonsäuren, die Abbauprodukte des Cholesterins sind, und die sich im allgemeinen von der 5β-Cholan-24-säure durch Einführung α-ständiger Hydroxy-Gruppen an C-3, C-6, C-7 und C-12 ableiten.

Bevorzugte Gallensäuren besitzen die allgemeine Formel 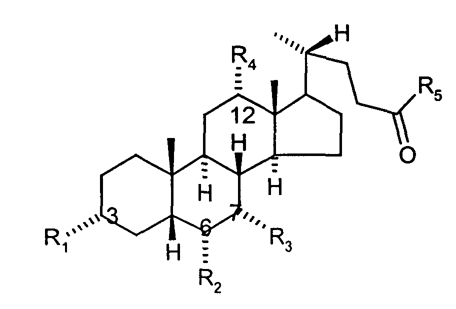 wobei R₁, R₂, R₃ und R₄ unabhängig voneinander H oder OH und R₅ OH, NH-CH₂-COOH, NH-CH₂-CH₂-SO₃H, NH-(CH₂)₃-N⁺(CH₃)₂-CH₂-CHOH-CH₂-SO₃⁻ oder NH-(CH₂)₃-N⁺(CH₃)₂-(CH₂)₃-SO₃⁻ bedeuten.

Geeignet sind die freien Säuren oder deren Salze, bevorzugt Alkali- oder Erdalkalimetallsalze, sowie deren Ester, bevorzugt mit Alkylresten mit 1 bis 30 C-Atomen, und deren Amide, bevorzugt mit Alkylresten oder Sulfoalkyl-, Sulfoalkylaminoalkyl, Sulfohydroxyalkylaminoalkyl- und Carboxyalkylresten in der Säure- oder Salzform.

Beispiele geeigneter Gallensäuren oder deren Salze, Ester oder Amide sind Cholsäure (3α,7α,12α-Trihydroxy-5β-cholan-24-säure; R₁ = R₃ = R₄ = R₅ = OH, R₂ = H), Cholsäurenatriumsalz (Natriumcholat), Lithiumcholat, Kaliumcholat, Glykolcholsäure (3α,7α,12α-Trihydroxy-5β-cholan-24-säure-N-[carboxymethyl]amid; R₁ = R₃ = R₄ = OH, R₂ = H, R₅ = NH-CH₂-COOH), Natriumglykocholat, Taurocholsäure (3α,7α,12α-Trihydroxy-5β-cholan-24-säure-N-[2-sulfoethyl]amid;
R₁ = R₃ = R₄ = OH, R₂ = H, R₅ = NH-CH₂-CH₂-SO₃H), Natriumtaurocholat, Desoxycholsäure (3α,12α-Dihydroxy-5β-cholan-24-säure; R₁ = R₄ = R₅ = OH, R₂ = R₃ = H), Natriumdesoxycholat, Kaliumdesoxycholat, Lithiumdesoxycholat, Glykodesoxycholsäure (3α,12α-Dihydroxy-5β-cholan-24-säure-N-[carboxymethyl]amid; R₁ = R₄ = OH, R₂ = R₃ = H, R₅ = NH-CH₂-COOH), Natriumglykodesoxycholat, Taurodesoxycholsäure (3α,12α-Dihydroxy-5β-cholan-24-säure-N-[2-sulfoethyl]amid; R₁ = R₄ = OH, R₂ = R₃ = H, R₅ = NH-CH₂-CH₂-SO₃H), Natriumtaurodesoxycholat, Chenodesoxycholsäure (3α,7α-Dihydroxy-5β-cholan-24-säure; R₁ = R₃ = R₅ = OH, R₂ = R₄ = H), Natriumchenodesoxycholat, Glykochenodesoxycholsäure (3α,7α-Dihydroxy-5β-cholan-24-säure-N-[carboxymethyl]amid;
R₁ = R₃ = OH, R₂ = R₄ = H, R₅ = NH-CH₂-COOH), Natriumglykochenodesoxycholat, Taurochenodesoxycholsäure (3α,7α-Dihydroxy-5β-cholan-24-säure-N-[2-sulfoethyl]amid; R₁ = R₃ = OH, R₂ = R₄ = H, R₅ = NH-CH₂-CH₂-SO₃H), Natriumtaurochenodesoxycholat, Lithocholsäure (3α-Hydroxy-5β-cholan-24-säure;
R₁ = R₅ = OH, R₂ = R₃ = R₄ = H), Natriumlithocholat, Kaliumlithocholat, Hyocholsäure (3α,6α,7α-Trihydroxy-5β-cholan-24-säure; R₁ = R₂ = R₃ = R₅ = OH, R₄ = H), Natriumhyocholat, Lithiumhyocholat, Kaliumhyocholat, Hyodesoxycholsäure (3α,6α-Dihydroxy-5β-cholan-24-säure; R₁ = R₂ = R₅ = OH; R₃ = R₄ = H), Natriumhyodesoxycholat, Lithiumhyodesoxycholat, Kaliumhyodesoxycholat, Cholsäuremethylester, Cholsäureethylester, Desoxycholsäureethylester und Hyocholsäuremethylester.

Besonders bevorzugt eingesetzt werden die Natrium-, Lithium- oder Kaliumsalze oder die Methyl- oder Ethylester der Cholsäure, Glykocholsäure, Taurocholsäure, Desoxycholsäure, Glykodesoxycholsäure, Taurodesoxycholsäure, Chenodesoxycholsäure, Glykochenodesoxycholsäure, Taurochenodesoxycholsäure, Lithocholsäure, Hyocholsäure, Hyodesoxycholsäure oder deren Gemische.

Weiter geeignet sind Gallensäuren wie Ursocholsäure (3α, 7β, 12α-Trihydroxy-5β-cholan-24-säure), Ursodesoxycholsäure (3α,7β-Dihydroxy-5β-cholan-24-säure), 7-Oxo-lithocholsäure (3α-Hydroxy-7-oxo-5β-cholan-24-säure), Lithocholsäure-3-sulfat (3α-Hydroxy-5β-cholan-24-säure-3-sulfat), nor-Cholsäure und bisnor-Cholsäure, oder deren Salze, Ester oder Amide.

Die Gallensäuren und deren Salze, Ester oder Amide sind allgemein gut bekannt und z.B. ausführlich beschrieben in Nachr. Chem. Tech. Lab. 43 (1995) 1047, Setchell et al.: "The Bile Acids", Bd. 4, Plenum, New York 1998 und "Römpp, Lexikon Naturstoffe", Stuttgart, New York 1997, S. 248ff.

Geeignete Cyclodextrine für Komponente c) sind z.B. unsubstituierte Cyclodextrine oder deren Ester-, Alkylether-, Hydroxyalkylether-, Alkoxycarbonylalkylether- und Carboxyalkyletherderivate oder deren Salze.

Cyclodextrine sind Cyclohexa-, Cyclohepta- oder Cyclooctaamylosen mit 6, 7 oder 8 1,4-verknüpften Glucose-Einheiten, die beim Abbau von Stärke durch Bacillus macerans oder Bacillus circulans unter Einwirkung von Cyclodextringlycosyltransferase entstehen, wie beispielsweise α-, β-, γ- oder δ-Cyclodextrin.

Für die Cyclodextrinester als Carbonsäurekomponente geeignet sind Aryl-, Aralkylund Alkylcarbonsäuren mit 2 bis 30 C-Atomen, bevorzugt 2 bis 24 C-Atomen, besonders bevorzugt 2 bis 20 C-Atomen, bevorzugt Aralkyl- und Alkylcarbonsäuren, besonders bevorzugt Alkylcarbonsäuren.

Als Alkylkomponente für die Cyclodextrinalkylether, -hydroxyalkylether, alkoxycarbonylalkylether und -carboxyalkylether kommen lineare oder verzweigte Alkylgruppen mit 1 bis 30 C-Atomen, bevorzugt 1 bis 24 C-Atomen, besonders bevorzugt 1 bis 20 C-Atomen in Frage.

Bevorzugt eingesetzte Cyclodextrine sind α-, β- und γ-Cyclodextrine und deren Mono-, Di- und Triether, Mono-, Di- und Triester oder Monoester/diether, die in der Regel durch Veretherung von α-, β- und γ-Cyclodextrinen mit Alkylierungsmitteln wie beispielsweise Dimethylsulfat oder Alkylhalogeniden mit 1 bis 30 C-Atomen wie beispielsweise Methyl-, Ethyl-, Propyl-, Butyl-, Pentyl-, Hexyl-, Heptyl-, Octylchlorid, -bromid oder -jodid und/oder Veresterung mit Essigsäure oder Bernsteinsäure in Gegenwart von Säuren erhalten werden.

Besonders bevorzugt sind Methyl-α-cyclodextrin, Methyl-β-cyclodextrin, Methyl-γ-cyclodextrin, Ethyl-β-cyclodextrin, Butyl-α-cyclodextrin, Butyl-β-cyclodextrin, Butyl-γ-cyclodextrin, 2,6-Dimethyl-α-cyclodextrin, 2,6-Dimethyl-β-cyclodextrin, 2,6-Dimethyl-γ-cyclodextrin, 2,6-Diethyl-β-cyclodextrin, 2,6-Dibutyl-β-cyclodextrin, 2,3,6-Trimethyl-α-cyclodextrin, 2,3,6-Trimethyl-β-cyclodextrin, 2,3,6-Trimethyl-γ-cyclodextrin, 2,3,6-Trioctyl-α-cyclodextrin, 2,3,6-Trioctyl-β-cyclodextrin, 2,3,6-Triacetyl-α-cyclodextrin, 2,3,6-Triacetyl-β-cyclodextrin, 2,3,6-Triacetyl-γ-cyclodextrin, (2-Hydroxy)propyl-α-cyclodextrin, (2-Hydroxy)propyl-β-cyclodextrin, (2-Hydroxy)-propyl-γ-cyclodextrin, teilweise oder vollständig acetyliertes und succinyliertes α-, β-oder γ-Cyclodextrin, 2,6-Dimethyl-3-acetyl-β-cyclodextrin oder 2,6-Dibutyl-3-acetyl-β-cyclodextrin.

Methoden zur Herstellung von Cyclodextrinen sind allgemein gut bekannt und beispielsweise ausführlich beschrieben in "Römpp, Lexikon Chemie", 10. Auflage, Stuttgart/New York 1997, S.845 ff und Chemical Reviews 98 (1998) 1743.

Als Komponente c) des erfindungsgemäßen Katalysators geeignete Phosphorverbindungen sind organische Phosphate wie beispielsweise Mono-, Di- oder Triester von Phosphorsäure, Mono-, Di-, Tri- oder Tetraester von Pyrophosphorsäure und Mono-, Di-, Tri-, Tetra- oder Polyester von Polyphosphorsäure und Alkoholen mit 1 bis 30 C-Atomen.

Geeignete organische Phosphite sind Mono-, Di- oder Triester von Phosphorigsäure und Alkoholen mit 1 bis 30 C-Atomen.

Geeignete organische Phosphonate sind z.B. Mono- oder Diester von Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren und Cyanphosphonsäuren oder Mono-, Di-, Tri- oder Tetraester von Alkyldiphosphonsäuren und Alkoholen mit 1 bis 30 C-Atomen.

Geeignete Phosphonite sind Diester von Phosphonigsäure oder Arylphosphonigsäure und Alkoholen mit 1 bis 30 C-Atomen.

Geeignete Phosphinate sind Ester von Phosphinsäure, Alkylphosphinsäuren, Dialkylphosphinsäuren oder Arylphosphinsäuren und Alkoholen mit 1 bis 30 C-Atomen.

Geeignete Phosphinite sind Ester von Alkylphosphinigsäure, Dialkylphosphinigsäure oder Arylphosphinigsäure und Alkoholen mit 1 bis 30 C-Atomen.

Als Alkoholkomponente geeignet sind ein- oder mehrwertige Aryl-, Aralkyl-, Alkoxyalkyl- und Alkylalkohole mit 1 bis 30 C-Atomen, bevorzugt 1 bis 24 C-Atomen, besonders bevorzugt 1 bis 20 C-Atomen, bevorzugt Aralkyl-, Alkoxyalkyl- und Alkylalkohole, besonders bevorzugt Alkoxyalkyl- und Alkylalkohole.

Die zur Herstellung der erfindungsgemäßen Katalysatoren eingesetzten organischen Phosphate, Phosphite, Phosphonate, Phosphonite, Phosphinate oder Phosphinite werden in der Regel durch Umsetzung von Phosphorsäure, Pyrophosphorsäure, Polyphosphorsäuren, Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren, Cyanphosphonsäure, Alkyldiphosphonsäuren, Phosphonigsäure, Phosphorigsäure, Phosphinsäure, Phosphinigsäure oder deren Halogenderivaten oder Phosphoroxiden mit Hydroxyverbindungen mit 1 bis 30 C-Atomen wie Methanol, Ethanol, Propanol, Butanol, Pentanol, Hexanol, 2-Ethylhexanol, Heptanol, Octanol, Nonanol, Dekanol, Dodekanol, Tridekanol, Tetradekanol, Pentadekanol, Hexadekanol, Heptadekanol, Octadekanol, Nonadekanol, Methoxymethanol, Ethoxymethanol, Propoxymethanol, Butoxymethanol, 2-Ethoxyethanol, 2-Propoxyethanol, 2-Butoxyethanol, Phenol, Hydroxyessigsäureethylester, Hydroxyessigsäurepropylester, Hydroxypropionsäureethylester, Hydroxypropionsäurepropylester, 1,2-Ethandiol, 1,2-Propandiol, 1,2,3-Trihydroxypropan, 1,1,1-Trimethylolpropan oder Pentaerythrit erhalten.

Bevorzugt sind Phosphorsäuretriethylester, Phosphorsäuretributylester, Phosphorsäuretrioctylester, Phosphorsäuretris(2-ethylhexyl)ester, Phosphorsäuretris-(2-butoxyethyl)ester, Butylphosphonsäuredibutylester, Phenylphosphonsäuredioctylester, Phosphonoameisensäuretriethylester, Phosphonoessigsäuretrimethylester, Phosphonoessigsäuretriethylester, 2-Phosphonopropionsäuretrimethylester, 2-Phosphonopropionsäuretriethylester, 2-Phosphonopropionsäuretripropylester, 2-Phosphonopropionsäuretributylester, 3-Phosphonopropionsäuretriethylester, Tributylphosphit, Trilaurylphosphit, Tris-(3-ethyloxethanyl-3-methyl)phosphit und Heptakis-(dipropylenglykol)phosphit.

Methoden zur Herstellung von Phosphorsäure-, Phosphorigsäure-, Phosphonsäure-, Phosphonigsäure-, Phosphinsäure- und Phosphinigsäureestern sind bekannt und ausführlich beschrieben in Kirk-Othmer: "Encyclopedia of Chemical Technology", Band 18, 4. Auflage, 1996, S. 737 ff.; "Römpp, Lexikon Chemie", Band 4, 10. Auflage, Stuttgart/New York, 1998, S. 3280 ff.; "Ullmann's Encyclopedia of Industrial Chemistry", Band A19, 5. Auflage, 1991, S. 545 ff., "Houben-Weyl: Methoden der organischen Chemie", Band XII/1 und XII/2, Stuttgart 1963/1964.

Für die Herstellung der erfindungsgemäßen Katalysatoren (Komponente c)) geeignete α,β-ungesättigte Carbonsäureester sind z.B. Mono-, Di-, Tri- oder Polyester von Acrylsäure und Alkyl-, Alkoxy-, Alkoxycarbonyl und Alkoxycarbonylalkylacrylsäuren mit Alkoholen mit 1 bis 30 C-Atomen oder Polyetherpolyolen.

Als Alkoholkomponente geeignet sind ein-, zwei-, drei- oder mehrwertige Aryl-, Aralkyl-, Alkoxyalkyl- und Alkylalkohole mit 1 bis 30 C-Atomen, bevorzugt 1 bis 24 C-Atomen, besonders bevorzugt 1 bis 20 C-Atomen, bevorzugt Aralkyl-, Alkoxyalkyl- und Alkylalkohole, besonders bevorzugt Alkoxyalkyl- und Alkylalkohole.

Weiterhin geeignet als Alkoholkomponente sind Polyalkylenglykole und Polyalkylenglykolether, bevorzugt Polypropylenglykole und Polyethylenglykole oder deren Ether mit Molekulargewichten von 200 bis 10000, bevorzugt 300 bis 9000, besonders bevorzugt 400 bis 8000.

Als α,β-ungesättigte Carbonsäuren kommen Acrylsäure und Alkyl-, Alkoxy- und Alkoxycarbonylalkylacrylsäuren mit 1 bis 20 C-Atomen wie 2-Methylacrylsäure (Methacrylsäure), 3-Methylacrylsäure (Crotonsäure), trans-2,3-Dimethylacrylsäure (Tiglinsäure), 3,3-Dimethylacrylsäure (Seneciosäure) oder 3-Methoxyacrylsäure, bevorzugt Acrylsäure, 2-Methylacrylsäure, 3-Methylacrylsäure und 3-Methoxyacrylsäure, besonders bevorzugt Acrylsäure und 2-Methylacrylsäure infrage.

Die zur Herstellung der erfindungsgemäßen Katalysatoren eingesetzten α,β-ungesättigten Carbonsäureester werden in der Regel durch Veresterung von Mono-, Di-, Tri-, Tetra- oder Polyhydroxyverbindungen mit 1 bis 30 C-Atomen wie Methanol, Ethanol, Ethandiol (Ethylenglykol), 1-Propanol, 2-Propanol, 1,2-Propandiol, 1,3-Propandiol, 1,2,3-Propantriol (Glycerin), Butanol, 2-Butanol, i-Butanol, 1,2-Butandiol, 1,3-Butandiol, 2,3-Butandiol, 1,4-Butandiol, 1,2,3-Butantriol, 1-Pentanol, 1-Hexanol, 1-Heptanol, 1-Octanol, 1-Nonanol, 1-Dekanol, 1-Dodekanol, 1-Tridekanol, 1-Tetradekanol, 1-Hexadekanol, 1-Heptadekanol, 9-Oktadekanol, 1,1,1-Tris-(hydroxymethyl)-propan, Pentaerythrit, Methoxymethanol, Ethoxymethanol, Propoxymethanol, Butoxymethanol, 2-Ethoxyethanol, 2-Propoxyethanol, 2-Butoxyethanol, Hydroxyessigsäuremethylester, Hydroxyessigsäureethylester, Hydroxyessigsäurepropylester, Hydroxypropionsäuremethylester, Hydroxypropionsäureethylester, Hydroxypropionsäurepropylester oder Polyetherpolyolen wie Polyethylenglykolen und Polypropylenglykolen mit den entsprechenden α,β-ungesättigten Carbonsäuren gegebenenfalls in Gegenwart von Katalysatoren erhalten.

Bevorzugt sind Mono-, Di- und Triester von Acrylsäure und Methacrylsäure mit Ethandiol, 1,2-Propandiol, 1,3-Propandiol, 1,4-Butandiol, 1,6-Hexandiol, 1,2,3-Propantriol, 1,1,1-Tris-(hydroxymethyl)-propan, 1,1,1-Tris-(hydroxymethyl)-propanethoxylaten, 1,1,1-Tris-(hydroxymethyl)-propan-propoxylaten, Polyethylenglykolen und Polypropylenglykolen.

Besonders bevorzugte α,β-ungesättigte Carbonsäureester sind Polyethylenglykolacrylsäureester, Polyethylenglykoldiacrylsäureester, Polyethylenglykolmethacrylsäureester, Polyethylenglykoldimethacrylsäureester, Polypropylenglykolacrylsäureester, Polypropylenglykoldiacrylsäureester, Polypropylenglykolmethacrylsäureester, Polypropylenglykoldimethacrylsäureester, 1,2,3-Propantrioldiacrylsäureester, 1,2,3-Propantrioldimethacrylsäureester, 1,2,3-Propantrioltriacrylsäureester, 1,2,3-Propantriol-1,3-(2-hydroxypropoxylat)diacrylsäureester, 1,2,3-Propantriolpropoxylat-triacrylsäureester, 1,4-Butandiolacrylsäureester, 1,4-Butandioldimethacrylsäureester, 1,6-Hexandioldiacrylsäureester, 2-Hydroxypropylmethacrylsäureester, 1,1,1 -Tris(hydroxymethyl)propantriacrylsäureester, 1,1,1 -Tris(hydroxymethyl)propan-ethoxylat-triacrylsäureester, 1,1,1-Tris(hydroxymethyl)propan-ethoxylat-trimethacrylsäureester, 1,1,1-Tris(hydroxymethyl)propan-propoxylat-triacrylsäureester oder 1,1,1-Tris(hydroxymethyl)propan-propoxylat-trimethacrylsäureester.

Methoden zur Herstellung von α,β-ungesättigten Carbonsäureestern sind allgemein gut bekannt und beispielsweise ausführlich beschrieben in "Kirk-Othmer: Encyclopedia of Chemical Technology", Band 18, 4. Auflage, 1996, S. 737ff.; "Römpp, Lexikon Chemie", Band 4, 10. Auflage, Stuttgart/New York 1998, S. 3286ff.; "Ullmanns Encyclopedia of Industrial Chemistry", Band A19, 5. Auflage, 1991, S. 545ff., "Houben-Weyl: Methoden der organischen Chemie, Band XII/1 und XII/2, Stuttgart 1963/1964.

Strukturelles Merkmal der als Komponente c) zur Herstellung der erfindungsgemäßen Katalysatoren geeigneten ionischen oberflächen- bzw. grenzflächenaktiven Verbindungen ist ihr amphiphiler Molekülaufbau, d.h. sie enthalten mindestens eine hydrophile ionische Gruppe (bzw. einen hydrophilen ionischen Molekülteil) und mindestens eine hydrophobe Gruppe (bzw. einen hydrophoben Molekülteil). Beispiele für derartige ionische oberflächen- bzw. grenzflächenaktiven Verbindungen finden sich in der Gruppe der Tenside, Seifen, Emulgatoren, Detergentien und Dispergiermittel.

Die hydrophilen ionischen Gruppen können anionischer, kationischer oder zwitterionischer (amphoterer) Natur sein. Beispiele anionischer Gruppen sind Carboxylat-, Sulfonat-, Sulfat-, Thiosulfat-, Phosphonat-, Phosphinat-, Phosphat- oder Dithiophosphatgruppen. Beispiele kationischer Gruppen sind Ammonium-, Phosphoniumoder Sulfoniumgruppen. Beispiele zwitterionischer Gruppen sind Betain-, Sulfobetain- oder Aminoxidgruppen.

Die hydrophoben Gruppen sind bevorzugt C₂-C₅₀-Kohlenwasserstoffreste wie Aryl-, Aralkyl- und Alkylreste. Es sind aber auch Fluoroalkyl-, Silaalkyl-, Thiaalkyl- oder Oxaalkylgruppen geeignet.

Beispiele geeigneter Verbindungsklassen mit hydrophilen anionischen Gruppen sind Carboxylate wie Alkylcarboxylate (Seifen), Ethercarboxylate (carboxymethylierte Ethoxylate), Polycarboxylate wie Malonate und Succinate, Gallensäuresalze, z.B. Gallensäureamide mit Sulfoalkyl- und Carboxyalkylresten in der Salzform, Aminosäurederivate wie Sarcoside (Alkanolysarcosinate), Sulfonamidocarboxylate, Sulfate wie Alkylsulfate, Ethersulfate, z.B. Fettalkoholethersulfate, Arylethersulfate oder Amidoethersulfate, sulfatierte Carboxylate, sulfatierte Carbonsäureglyceride, sulfatierte Carbonsäureester, sulfatierte Carbonsäureamide, Sulfonate, z.B. Alkyl-, Arylund Alkylarylsulfonate, sulfonierte Carboxylate, sulfonierte Carbonsäureester, sulfonierte Carbonsäureamide, Carboxylestersulfonate wie α-Sulfofettsäureester, Carboxyamidsulfonate, Sulfobernsteinsäureester, Ethersulfonate, Thiosulfate, Phosphate, z.B. Alkylphosphate oder Glycerinphosphate, Phosphonate, Phosphinate und Dithiophosphate.

Beispiele geeigneter Verbindungsklassen mit hydrophilen kationischen Gruppen sind primäre, sekundäre, tertiäre und quarternäre Ammoniumsalze mit Alkyl-, Aryl- und Aralkylresten, alkoxylierte Ammoniumsalze, quarternäre Ammoniumester, Benzylammoniumsalze, Alkanolammoniumsalze, Pyridiniumsalze, Imidazoliniumsalze, Oxazoliniumsalze, Thiazoliniumsalze, Salze von Aminoxiden, Sulfoniumsalze, Chinoliniumsalze, Isochinoliniumsalze und Tropyliumsalze.

Beispiele geeigneter Verbindungsklassen mit hydrophiler zwitterionischer (amphoterer) Gruppe sind Aminoxide, Imidazoliniumderivate wie Imidazoliniumcarboxylate, Betaine, z.B. Alkyl- und Amidopropylbetaine, Sulfobetaine, Aminocarbonsäuren und Phospholipide, z.B. Phosphatidylcholin (Lecithin).

Natürlich können die ionischen oberflächen- bzw. grenzflächenaktiven Verbindungen auch mehrere hydrophile (anionische und/oder kationische und/oder zwitterionische) Gruppen oder Molekülteile enthalten.

Die zur Herstellung der erfindungsgemäßen Katalysatoren geeigneten ionischen oberflächen- bzw. grenzflächenaktiven Verbindungen sind allgemein gut bekannt und z.B. ausführlich beschrieben in "Ullmann's Encyclopedia of Industrial Chemistry", 5^{th} Edition, Vol. A25, S. 747-817, VCH, Weinheim, 1994, "Kirk-Othmer, Encyclopedia of Chemical Technology", 4^{th} Edition, Vol. 23, S. 477-541, John Wiley & Sons, New York, 1997, "Tensid-Taschenbuch", 2. Aufl., H. Stache (Hrsg.), Carl Hanser Verlag, München, 1982, "Surfactant Science Series", Vol. 1-74, M. J. Schick (Consulting Editor), Marcel Decker, New York, 1967-1998, "Methods in Enzymology", Vol. 182, M.P. Deutscher (Ed.), S.239-253, Academic Press, San Diego, 1990.

Die erfindungsgemäßen Katalysatoren enthalten als Komponente c) komplexbildende Komponenten aus zwei verschiedenen der vorbeschriebenen Verbindungsklassen.

Bevorzugte Ausführungsformen sind Katalysatoren, die eine Kombination von Phosphorverbindungen mit α,β-ungesättigten Carbonsäureestern, von Phosphorverbindungen mit Cyclodextrinen, von Phosphorverbindungen mit Polyestern, Phosphorverbindungen mit Glycosiden, oder von Phosphorverbindungen mit Gallensäuren bzw. deren Salzen, Estern oder Amiden enthalten. Besonders bevorzugt sind solche, die eine Kombination von Phosphorverbindungen mit α,β-ungesättigten Carbonsäureestern, von Phosphorverbindungen mit Polyestern, Phosphorverbindungen mit Glycosiden, oder von Phosphorverbindungen mit Gallensäuren bzw. deren Salzen, Estern oder Amiden enthalten.

Weitere bevorzugte Ausführungsformen sind Katalysatoren, die eine Kombination von Carbonsäureestern mehrwertiger Alkohole mit α,β-ungesättigten Carbonsäureestern, von Carbonsäureestern mehrwertiger Alkohole mit Cyclodextrinen, von Carbonsäureestern mehrwertiger Alkohole mit Polyestern, von Carbonsäureestern mehrwertiger Alkohole mit Glycosiden, von Carbonsäureestern mehrwertiger Alkohole mit Glycidylethern, von Carbonsäureestern mehrwertiger Alkohole mit Gallensäuren bzw. deren Salzen, Estern oder Amiden, oder von Carbonsäureestern mehrwertiger Alkohole mit Phosphorverbindungen enthalten. Besonders bevorzugt sind solche, die eine Kombination von Carbonsäureestern mehrwertiger Alkohole mit α,β-ungesättigten Carbonsäureestern, von Carbonsäureestern mehrwertiger Alkohole mit Polyestern, von Carbonsäureestern mehrwertiger Alkohole mit Glycosiden, von Carbonsäureestern mehrwertiger Alkohole mit Glycidylethern, oder von Carbonsäureestern mehrwertiger Alkohole mit Gallensäuren bzw. deren Salzen, Estern oder Amiden enthalten.

Weitere bevorzugte Ausführungsformen sind Katalysatoren, die eine Kombination von α,β-ungesättigten Carbonsäureestern mit Cyclodextrinen, von α,β-ungesättigten Carbonsäureestern mit Polyestern, von α,β-ungesättigten Carbonsäureestern mit Glycosiden, von α,β-ungesättigten Carbonsäureestern mit Gallensäuren bzw. deren Salzen, Estern oder Amiden, von α,β-ungesättigten Carbonsäureestern mit Phosphorverbindungen oder von α,β-ungesättigten Carbonsäureestern mit Carbonsäureestern mehrwertiger Alkohole enthalten. Besonders bevorzugt sind solche, die eine Kombination von α,β-ungesättigten Carbonsäureestern mit Glycosiden, von α,β-ungesättigten Carbonsäureestern mit Gallensäuren bzw. deren Salzen, Estern oder Amiden, oder von α,β-ungesättigten Carbonsäureestern mit Phosphorverbindungen enthalten.

Weitere bevorzugte Ausführungsformen sind Katalysatoren, die eine Kombination von Cyclodextrinen mit Glycidylethern, von Cyclodextrinen mit Gallensäuren bzw. deren Salzen, Estern oder Amiden, von Cyclodextrinen mit Phosphorverbindungen, von Cyclodextrinen mit Carbonsäureestern mehrwertiger Alkohole oder von Cyclodextrinen mit α,β-ungesättigten Carbonsäureestern enthalten. Besonders bevorzugt sind solche, die eine Kombination von Cyclodextrinen mit Glycidylethern, von Cyclodextrinen mit Gallensäuren bzw. deren Salzen, Estern oder Amiden oder von Cyclodextrinen mit α,β-ungesättigten Carbonsäureestern enthalten.

Weitere bevorzugte Ausführungsformen sind Katalysatoren, die eine Kombination von Polyestern mit Phosphorverbindungen, von Polyestern mit Carbonsäureestern mehrwertiger Alkohole oder von Polyestem mit α,β-ungesättigten Carbonsäureestern enthalten.

Weitere bevorzugte Ausführungsformen sind Katalysatoren, die eine Kombination von Glycosiden mit Glycidylethern, von Glycosiden mit Gallensäuren bzw. deren Salzen, Estern oder Amiden, von Glycosiden mit Phosphorverbindungen, von Glycosiden mit Carbonsäureestern mehrwertiger Alkohole oder von Glycosiden mit α,β-ungesättigten Carbonsäureestern enthalten.

Weitere bevorzugte Ausführungsformen sind Katalysatoren, die eine Kombination von Glycidylethern mit Gallensäuren bzw. deren Salzen, Estern oder Amiden, von Glycidylethern mit Phosphorverbindungen, von Glycidylethem mit Carbonsäureestem mehrwertiger Alkohole, von Glycidylethern mit α,β-ungesättigten Carbonsäureestern, von Glycidylethem mit Cyclodextrinen oder von Glycidylethern mit Glycosiden enthalten.

Weitere bevorzugte Ausführungsformen sind Katalysatoren, die eine Kombination von Gallensäuren bzw. deren Salzen, Estern oder Amiden mit Phosphorverbindungen, von Gallensäuren bzw. deren Salzen, Estern oder Amiden mit Carbonsäureestern mehrwertiger Alkohole, von Gallensäuren bzw. deren Salzen, Estern oder Amiden mit α,β-ungesättigten Carbonsäureestern, von Gallensäuren bzw. deren Salzen, Estern oder Amiden mit Cyclodextrinen, von Gallensäuren bzw. deren Salzen, Estern oder Amiden mit Glycosiden, oder von Gallensäuren bzw. deren Salzen, Estern oder Amiden mit Glycidylethern enthalten.

Die Analyse der Katalysatorzusammensetzung erfolgt üblicherweise mittels Elementaranalyse, Thermogravimetrie oder extraktiver Entfernung der komplexbildenden Komponenten mit anschließender gravimetrischer Bestimmung.

Die erfindungsgemäßen Katalysatoren können kristallin, teilkristallin oder amorph sein. Die Analyse der Kristallinität erfolgt üblicherweise durch Pulverröntgendiffraktometrie.

Bevorzugt sind erfindungsgemäße Katalysatoren, die als Komponente a) Zinkhexacyanocobaltat (III) und als Komponente b) tert.-Butanol enthalten.

Die Herstellung der erfindungsgemäßen DMC-Katalysatoren erfolgt üblicherweise in wässriger Lösung durch Umsetzung von Metallsalzen, insbesondere der Formel (I), mit Metallcyanidsalzen, insbesondere der Formel (II), in Gegenwart von organischen Komplexliganden b), die weder funktionalisierte Polymere, Glycidylether, Glycoside, Carbonsäureester mehrwertiger Alkohole, Gallensäuren oder deren Salze, Ester oder Amide, Cyclodextrine, Phosphorverbindungen, α,β-ungesättigte Carbonsäureester oder ionische oberflächen- bzw. grenzflächenaktive Verbindungen sind und den komplexbildenden Komponenten c).

Bevorzugt werden dabei zunächst die wässrigen Lösungen des Metallsalzes (z.B. Zinkchlorid, eingesetzt im stöchiometrischen Überschuss (mindestens 50 Mol-% bezogen auf das Metallcyanidsalz)) und des Metallcyanidsalzes (z.B. Kaliumhexacyanocobaltat) in Gegenwart des organischen Komplexliganden b) (z.B. tert.-Butanol) umgesetzt, wobei sich eine Suspension bildet, die die Doppelmetallcyanid-Verbindung a) (z.B. Zinkhexacyanocobaltat), Wasser d), überschüssiges Metallsalz e), und den organischen Komplexliganden b) enthält.

Der organische Komplexligand b) kann dabei in der wässrigen Lösung des Metallsalzes und/oder des Metallcyanidsalzes vorhanden sein, oder er wird der nach Ausfällung der Doppelmetallcyanid-Verbindung a) erhaltenen Suspension unmittelbar zugegeben. Es hat sich als vorteilhaft erwiesen, die wässrigen Lösungen und den organischen Komplexliganden b) unter starkem Rühren zu vermischen. Die gebildete Suspension wird üblicherweise anschließend mit einer Mischung der komplexbildenden Komponenten c) behandelt. Die Mischung der komplexbildenden Komponenten c) wird dabei bevorzugt in einer Mischung mit Wasser und organischem Komplexliganden b) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wässrigen Lösung des organischen Komplexliganden b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge des organischen Komplexliganden b) in der wässrigen Waschlösung zwischen 40 und 80 Gew.-%, bezogen auf die Gesamtlösung. Weiterhin ist es vorteilhaft, der wässrigen Waschlösung eine kleine Menge der Mischung der komplexbildenden Komponenten c) zuzufügen, bevorzugt 0,5 bis 5 Gew.-%, bezogen auf die Gesamtlösung.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwässrige Lösungen zu verwenden, z.B. eine Mischung aus organischem Komplexliganden und der Mischung der komplexbildenden Komponenten c).

Der gewaschene Katalysator wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f zu entnehmen.

Als aktive Wasserstoffatome aufweisende Starterverbindungen werden vorzugsweise Verbindungen mit (zahlenmittleren) Molekulargewichten von 18 bis 2 000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit (zahlenmittleren) Molekulargewichten von 200 bis 2 000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,0001 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, dass unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die (zahlenmittleren) Molekulargewichte der nach dem erfindungsgemäßen Verfahren hergestellten Polyetherpolyole liegen im Bereich von 500 bis 100.000 g/mol, bevorzugt im Bereich von 1 000 bis 50 000 g/mol, besonders bevorzugt im Bereich von 2 000 bis 20 000 g/mol.

Die Polyaddition kann kontinuierlich oder diskontinuierlich, z.B. in einem Batchoder im Semibatchverfahren durchgeführt werden.

Die erfindungsgemäßen Katalysatoren können wegen ihrer deutlich erhöhten Aktivität in sehr niedrigen Konzentrationen eingesetzt werden (100 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl. 1993, S. 25-32 und 57-67), kann auf eine Entfernung des Katalysators aus dem Polyetherpolyol verzichtet werden, ohne dass die Produktqualitäten des erhaltenen Polyurethans nachteilig beeinflusst werden.

### Beispiele

### Katalysatorpräparation

### Beispiel 1 DMC-Katalysator enthaltend Phosphorverbindung und α,β-ungesättigten Carbonsäureester (Katalysator I).

Zu einer Lösung aus 4 g (12 mmol) Kaliumhexacyanocobaltat in 70 ml destilliertem Wasser wurde unter starkem Rühren (24 000 U/min) eine Lösung aus 12,5 g (91,5 mmol) Zinkchlorid in 20 ml destilliertem Wasser gegeben. Unmittelbar danach wurde eine Mischung aus 50 g tert.-Butanol und 50 g destilliertem Wasser zur gebildeten Suspension gegeben und anschließend 10 min stark gerührt (24 000 U/min). Dann wurde eine Mischung aus 0,5 g Polyethylenglykol-Diacrylat (Mₙ 575 g/mol) und 0,5 g 2-Phosphonopropionsäuretriethylester, 1 g tert.-Butanol und 100 g destilliertem Wasser zugegeben und 3 min gerührt (1 000 U/min). Der Feststoff wurde durch Filtration isoliert, dann 10 min mit einer Mischung aus 70 g tert.-Butanol, 30 g destilliertem Wasser, 0,5 g Glycerintricapronat und 0,5 g 2-Phosphonopropionsäuretriethylester gerührt (10 000 U/min) und erneut filtriert. Abschließend wurde noch einmal 10 min mit einer Mischung aus 100 g tert.-Butanol, 0,5 g Polyethylenglykol-Diacrylat (Mₙ 575 g/mol) und 0,5 g 2-Phosphonopropionsäuretriethylester gerührt (10 000 U/min). Nach Filtration wurde der Katalysator bei 50°C und Normaldruck bis zur Gewichtskonstanz getrocknet.
Ausbeute an getrocknetem, pulverförmigem Katalysator: 6,0 g
Elementaranalyse:
Cobalt = 10,9 Gew.-%, Zink = 24,9 Gew.-%

### Beispiel 2 DMC-Katalysator enthaltend Phosphorverbindung und Cyclodextrin (Katalysator II).

Es wurde verfahren wie in Beispiel 1, jedoch wurden anstelle von Polyethylenglykol-Diacrylat und 2-Phosphonopropionsäuretriethylester als komplexbildende Komponenten 2,6-Dimethyl-β-cyclodextrin (Beta W 7 M 1,8, Wacker-Chemie GmbH, D-81737 München) und 2-Phosphonopropionsäuretriethylester eingesetzt.
Ausbeute an getrocknetem, pulverförmigem Katalysator: 4,8 g
Elementaranalyse:
Cobalt = 10,7 Gew.-%, Zink = 24,3 Gew.-%.

### Beispiel 3 DMC-Katalysator enthaltend Phosphorverbindung und Polyester (Katalysator III).

Es wurde verfahren wie in Beispiel 1, jedoch wurden anstelle von Polyethylenglykol-Diacrylat und 2-Phosphonopropionsäuretriethylester als komplexbildende Komponenten Poly(2-methyl-1,3-propylenglutarat) (Mₙ 1020) und 2-Phosphonopropionsäuretriethylester eingesetzt.
Ausbeute an getrocknetem, pulverförmigem Katalysator: 4,4 g
Elementaranalyse:
Cobalt = 9,9 Gew.-%, Zink = 23,4 Gew.-%.,

### Beispiel 4 DMC-Katalysator enthaltend Phosphorverbindung und Glykosid (Katalysator IV).

Es wurde verfahren wie in Beispiel 1, jedoch wurden anstelle von Polyethylenglykol-Diacrylat und 2-Phosphonopropionsäuretriethylester als komplexbildende Komponenten Alkylpolyglykosid (Glucopon® 650 EC, Henkel KG aA, D-40589 Düsseldorf) und 2-Phosphonopropionsäuretriethylester eingesetzt.
Ausbeute an getrocknetem, pulverförmigem Katalysator: 4,3 g
Elementaranalyse:
Cobalt = 11,2 Gew.-%, Zink = 25,2 Gew.-%.

### Beispiel 5 DMC-Katalysator enthaltend Phosphorverbindung und Gallensäurederivat (Katalysator V).

Es wurde verfahren wie in Beispiel 1, jedoch wurden anstelle von Polyethylenglykol-Diacrylat und 2-Phosphonopropionsäuretriethylester als komplexbildende Komponenten Cholsäure-Natriumsalz und 2-Phosphonopropionsäuretriethylester eingesetzt.
Ausbeute an getrocknetem, pulverförmigem Katalysator: 5,7 g
Elementaranalyse:
Cobalt = 14,0 Gew.-%, Zink 32,0 Gew.-%.

### Beispiel 6 DMC-Katalysator enthaltend Carbonsäureester mehrwertiger Alkohole und α,β-ungesättigten Carbonsäureester (Katalysator VI).

Es wurde verfahren wie in Beispiel 1, jedoch wurden anstelle von Polyethylenglykol-Diacrylat und 2-Phosphonopropionsäuretriethylester als komplexbildende Komponenten Polyethylenglykol-sorbitanmonooleat (Disponil® SMO 120, Henkel KG aA, 40589 Düsseldorf) und Polyethylenglykol-Diacrylat (Mₙ 575 g/mol) eingesetzt.
Ausbeute an getrocknetem, pulverförmigem Katalysator: 5,2 g
Elementaranalyse:
Cobalt = 9,6 Gew.-%, Zink = 21,9 Gew.-%.

### Beispiel 7 DMC-Katalysator enthaltend Carbonsäureester mehrwertiger Alkohole und Cyclodextrin (Katalysator VII).

Es wurde verfahren wie in Beispiel 1, jedoch wurden anstelle von Polyethylenglykol-Diacrylat und 2-Phosphonopropionsäuretriethylester als komplexbildende Komponenten Polyethylenglykol-sorbitanmonooleat (Disponil® SMO 120) und 2,6-Dimethyl-β-cyclodextrin (Beta W 7 M 1,8) eingesetzt.
Ausbeute an getrocknetem, pulverförmigem Katalysator: 4,6 g
Elementaranalyse, Thermogravimetrische Analyse und Extraktion:
Cobalt = 10,1 Gew.-%, Zink = 22,1 Gew.-%.

### Beispiel 8 DMC-Katalysator enthaltend Carbonsäureester mehrwertiger Alkohole und Polyester (Katalysator VIII).

Es wurde verfahren wie in Beispiel 1, jedoch wurden anstelle von Polyethylenglykol-Diacrylat und 2-Phosphonopropionsäuretriethylester als komplexbildende Komponenten Glycerintricapronat und Poly(2-methyl-1,3-propylenglutarat) (Mₙ 1020) eingesetzt.
Ausbeute an getrocknetem, pulverförmigem Katalysator: 5,2 g
Elementaranalyse:
Cobalt = 10,1 Gew.-%, Zink = 23,8 Gew.-%.

### Beispiel 9 DMC-Katalysator enthaltend Carbonsäureester mehrwertiger Alkohole und Glykosid (Katalysator IX).

Es wurde verfahren wie in Beispiel 1, jedoch wurden anstelle von Polyethylenglykol-Diacrylat und 2-Phosphonopropionsäuretriethylester als komplexbildende Komponenten Glycerintricapronat und Alkylpolyglykosid (Glucopon® 650 EC) eingesetzt.
Ausbeute an getrocknetem, pulverförmigem Katalysator: 3,8 g
Elementaranalyse:
Cobalt = 10,2 Gew.-%, Zink = 24,7 Gew.-%.

### Beispiel 10 DMC-Katalysator enthaltend Carbonsäureester mehrwertiger Alkohole und Glycidylether (Katalysator X).

Es wurde verfahren wie in Beispiel 1, jedoch wurden anstelle von Polyethylenglykol-Diacrylat und 2-Phosphonopropionsäuretriethylester als komplexbildende Komponenten Glycerintricapronat und Polypropylenglykoldiglycidylether (Mₙ 640 g/mol) eingesetzt.
Ausbeute an getrocknetem, pulverförmigem Katalysator: 5,4 g
Elementaranalyse:
Cobalt = 11,1 Gew.-%, Zink =24,9 Gew.-%.

### Beispiel 11 DMC-Katalysator enthaltend Carbonsäureester mehrwertiger Alkohole und Gallensäurederivat (Katalysator XI).

Es wurde verfahren wie in Beispiel 1, jedoch wurden anstelle von Polyethylenglykol-Diacrylat und 2-Phosphonopropionsäuretriethylester als komplexbildende Komponenten Glycerintricapronat und Cholsäure-Natriumsalz eingesetzt.
Ausbeute an getrocknetem, pulverförmigem Katalysator: 4,5 g
Elementaranalyse:
Cobalt = 13,0 Gew.-%, Zink = 30,0 Gew.-%.

### Beispiel 12 DMC-Katalysator enthaltend α,β-ungesättigten Carbonsäureester und Cyclodextrin (Katalysator XII).

Es wurde verfahren wie in Beispiel 1, jedoch wurden anstelle von Polyethylenglykol-Diacrylat und 2-Phosphonopropionsäuretriethylester als komplexbildende Komponenten Polyethylenglykol-Diacrylat (Mₙ 575 g/mol) und 2,6-Dimethyl-β-cyclodextrin ( Beta W 7 M 1,8) eingesetzt.
Ausbeute an getrocknetem, pulverförmigem Katalysator: 4,7 g
Elementaranalyse:
Cobalt = 10,5 Gew.-%, Zink = 23,5 Gew.-%.

### Beispiel 13 DMC-Katalysator enthaltend α,β-ungesättigten Carbonsäureester und Polyester (Katalysator XIII).

Es wurde verfahren wie in Beispiel 1, jedoch wurden anstelle von Polyethylenglykol-Diacrylat und 2-Phosphonopropionsäuretriethylester als komplexbildende Komponenten Polyethylenglykol-Diacrylat (Mₙ 575 g/mol) und Poly(2-methyl-1,3-propylenglutarat (Mₙ 1020) eingesetzt.
Ausbeute an getrocknetem, pulverförmigem Katalysator: 5,6 g
Elementaranalyse:
Cobalt = 11,3 Gew.-%, Zink = 25,6 Gew.-%.

### Beispiel 14 DMC-Katalysator enthaltend α,β-ungesättigten Carbonsäureester und Glykosid (Katalysator XIV).

Es wurde verfahren wie in Beispiel 1, jedoch wurden anstelle von Polyethylenglykol-Diacrylat und 2-Phosphonopropionsäuretriethylester als komplexbildende Komponenten Polyethylenglykol-Diacrylat (Mₙ 575 g/mol) und Alkylpolyglykosid (Glucopon® 650 EC) eingesetzt.
Ausbeute an getrocknetem, pulverförmigem Katalysator: 4,7 g
Elementaranalyse, Thermogravimetrische Analyse und Extraktion:
Cobalt = 9,5 Gew.-%, Zink = 21,9 Gew.-%.

### Beispiel 15 DMC-Katalysator enthaltend α,β-ungesättigten Carbonsäureester und Glycidylether (Katalysator XV).

Es wurde verfahren wie in Beispiel 1, jedoch wurden anstelle von Polyethylenglykol-Diacrylat und 2-Phosphonopropionsäuretriethylester als komplexbildende Komponenten Polyethylenglykol-Diacrylat (Mₙ 575 g/mol) und Polypropylenglykol-Diglycidylether (Mₙ 640 g/mol) eingesetzt.
Ausbeute an getrocknetem, pulverförmigem Katalysator: 5,3 g
Elementaranalyse:
Cobalt = 8,4 Gew.-%, Zink = 20,4 Gew.-%.

### Beispiel 16 DMC-Katalysator enthaltend α,β-ungesättigten Carbonsäureester und Gallensäurederivat (Katalysator XVI).

Es wurde verfahren wie in Beispiel 1, jedoch wurden anstelle von Polyethylenglykol-Diacrylat und 2-Phosphonopropionsäuretriethylester als komplexbildende Komponenten Polyethylenglykol-Diacrylat (Mₙ 575 g/mol) und Cholsäure-Natriumsalz eingesetzt.
Ausbeute an getrocknetem, pulverförmigem Katalysator: 5,6 g
Elementaranalyse:
Cobalt = 11,5 Gew.-%, Zink = 26,4 Gew.-%.

### Beispiel 17 DMC-Katalysator enthaltend Cyclodextrin und Glycidylether (Katalysator XVII).

Es wurde verfahren wie in Beispiel 1, jedoch wurden anstelle von Polyethylenglykol-Diacrylat und 2-Phosphonopropionsäuretriethylester als komplexbildende Komponenten Polypropylenglykol-Diglycidylether (Mₙ 640 g/mol) und 2,6-Dimethyl-β-cyclodextrin ( Beta W 7 M 1,8) eingesetzt.
Ausbeute an getrocknetem, pulverförmigem Katalysator: 5,1 g
Elementaranalyse:
Cobalt = 9,4 Gew.-%, Zink = 22,4 Gew.-%.

### Beispiel 18 DMC-Katalysator enthaltend Cyclodextrin und Gallensäurederivat (Katalysator XVIII).

Es wurde verfahren wie in Beispiel 1, jedoch wurden anstelle von Polyethylenglykol-Diacrylat und 2-Phosphonopropionsäuretriethylester als komplexbildende Komponenten 2,6-Dimethyl-β-cyclodextrin ( Beta W 7 M 1,8) und Cholsäure-Natriumsalz eingesetzt.
Ausbeute an getrocknetem, pulverförmigem Katalysator: 4,3 g
Elementaranalyse:
Cobalt = 11,4 Gew.-%, Zink = 26,7 Gew.-%.

### Beispiel 19 DMC-Katalysator enthaltend Glycosid und Glycidylether (Katalysator XIX).

Es wurde verfahren wie in Beispiel 1, jedoch wurden anstelle von Polyethylenglykol-Diacrylat und 2-Phosphonopropionsäuretriethylester als komplexbildende Komponenten Alkylpolyglycosid (Glucopon® 650 EC) und Polypropylenglykol-Diglycidylether (Mₙ 640 g/mol) eingesetzt.
Ausbeute an getrocknetem, pulverförmigem Katalysator: 6,3 g
Elementaranalyse:
Cobalt = 10,0 Gew.-%, Zink = 22,6 Gew.-%.

### Beispiel 20 DMC-Katalysator enthaltend Glycosid und Gallensäurederivat (Katalysator XX).

Es wurde verfahren wie in Beispiel 1, jedoch wurden anstelle von Polyethylenglykol-Diacrylat und 2-Phosphonopropionsäuretriethylester als komplexbildende Komponenten Alkylpolyglycosid (Glucopon® 650 EC) und Cholsäure-Natriumsalz eingesetzt.
Ausbeute an getrocknetem, pulverförmigem Katalysator: 4,4 g
Elementaranalyse:
Cobalt = 11,6 Gew.-%, Zink = 27,8 Gew.-%.

### Beispiel 21 DMC-Katalysator enthaltend Glycidylether und Gallensäurederivat (Katalysator XXI).

Es wurde verfahren wie in Beispiel 1, jedoch wurden anstelle von Polyethylenglykol-Diacrylat und 2-Phosphonopropionsäuretriethylester als komplexbildende Komponenten Polypropylenglykol-Diglycidylether (Mₙ 640 g/mol) und Cholsäure-Natriumsalz eingesetzt.
Ausbeute an getrocknetem, pulverförmigem Katalysator: 6,6 g
Elementaranalyse:
Cobalt = 9,0 Gew.-%, Zink = 21,4 Gew.-%.

### Beispiel 22 DMC-Katalysator enthaltend Phosphorverbindung und α,β-ungesättigten Carbonsäureester (Katalysator XXII).

Es wurde verfahren wie in Beispiel 1, jedoch wurden anstelle von Polyethylenglykol-Diacrylat und 2-Phosphonopropionsäuretriethylester als komplexbildende Komponenten Trimethylolpropanethoxylat(14/3 EO/OH)triacrylat und 2-Phosphonopropionsäuretriethylester eingesetzt.
Ausbeute an getrocknetem, pulverförmigem Katalysator: 6,3 g
Elementaranalyse:
Cobalt = 9,2 Gew.-%, Zink = 21,2 Gew.-%.

### Beispiel 23 (Vergleich) Carbonsäure mehrwertiger Alkohole enthaltender DMC-Katalysator (Katalysator XXIII)

Zu einer Lösung aus 4 g (12 mmol) Kaliumhexacyanocobaltat in 75 ml destilliertem Wasser gab man unter starkem Rühren (24 000 U/min) eine Lösung aus 12,5 g (91,5 mmol) Zinkchlorid in 20 ml destilliertem Wasser. Unmittelbar danach wurde eine Mischung aus 50 g tert.-Butanol und 50 g destilliertem Wasser zur gebildeten Suspension gegeben und anschließend 10 min stark gerührt (24 000 U/min). Dann wurde eine Mischung aus 1 g Glycerintricapronat, 1 g tert.-Butanol und 100 g destilliertem Wasser zugegeben und 3 min gerührt (10 000 U/min). Der Feststoff wurde durch Filtration isoliert, dann 10 min mit einer Mischung aus 70 g tert.-Butanol, 30 g destilliertem Wasser und 1 g Glycerintricapronat gerührt und erneut filtriert. Abschließend wurde noch einmal 10 min mit einer Mischung aus 100 g tert.-Butanol und 0,5 g Glycerintricapronat gerührt (10 000 U/min). Nach Filtration wurde der Katalysator bei 50°C und Normaldruck bis zur Gewichtskonstanz getrocknet.
Ausbeute an getrocknetem, pulverförmigem Katalysator: 5,3 g
Elementaranalyse,Thermogravimetrische Analyse und Extraktion:
Cobalt = 12,3 Gew.-%, Zink = 27,0 Gew.-%, tert.-Butanol = 7,2 Gew.-%, Glycerintricapronat = 3,7 Gew.-%.

### Beispiel 24 (Vergleich) Phosphorverbindung enthaltender DMC-Katalysator (Katalysator XXIV)

Es wurde verfahren wie in Beispiel 23, jedoch wurde 2-Phosphonopropionsäuretriethylester anstelle des Glycerintricapronats eingesetzt.
Ausbeute an getrocknetem, pulverförmigem Katalysator: 5,9 g
Elementaranalyse, Thermogravimetrische Analyse und Extraktion:
Cobalt = 10,2 Gew.-%, Zink = 23,5 Gew.-%, tert.-Butanol = 2,3 Gew.-%, 2-Phosphonopropionsäuretriethylester = 26,1 Gew.-%.

### Beispiel 25 (Vergleich) Glycidylether enthaltender DMC-Katalysator (Katalysator XXV)

Es wurde verfahren wie in Beispiel 23 (Vergleich), jedoch wurde Polypropylenglykoldiglycidylether mit mittlerer Molmasse 640 anstelle des Glycerintricapronats eingesetzt.
Ausbeute an getrocknetem, pulverförmigem Katalysator: 6,0 g
Elementaranalyse, Thermogravimetrische Analyse und Extraktion:
Cobalt = 8,7 Gew.-%, Zink = 20,2 Gew.-%, tert.-Butanol = 4,2 Gew.-%, Polypropylenglykoldiglycidylether-Ligand = 30,5 %.

### Beispiel 26 (Vergleich) Polyester enthaltender DMC-Katalysator (Katalysator XXVI)

Es wurde verfahren wie in Beispiel 23, jedoch wurde ein durch Trimethylolpropan schwach verzweigter Polyester aus Adipinsäure und Diethylenglykol mit mittlerer Molmasse 2300 (OH-Zahl = 50 mg KOH/g) anstelle des Glycerintricapronats aus Beispiel 23 eingesetzt.
Ausbeute an getrocknetem, pulverförmigem Katalysator: 3,9 g
Elementaranalyse und Thermogravimetrische Analyse:
Cobalt = 12,2 Gew.-%, Zink = 25,7 Gew.-%, tert.- Butanol = 7,1 Gew.-%, Polyester = 12,3 Gew.-%.

### Beispiel 27 (Vergleich) Gallensäurederivat enthaltender DMC-Katalysator (Katalysator XXVII)

Es wurde verfahren wie in Beispiel 23, jedoch wurde Cholsäure-Natriumsalz anstelle des Glycerintricapronats eingesetzt.
Ausbeute an getrocknetem, pulverförmigem Katalysator: 4,2 g
Elementaranalyse, Thermogravimetrische Analyse und Extraktion:
Cobalt = 12,6 Gew.-%, Zink = 27,3 Gew.-%, tert.-Butanol = 10,9 Gew.-%, Cholsäure Natriumsalz = 4,3 Gew.-%

### Herstellung von Polyetherpolyolen

### Allgemeine Durchführung

In einem 500 ml Druckreaktor wurden 50 g Polypropylenglykol-Starter (zahlenmittleres Molekulargewicht = 1 000 g/mol) und 20 mg Katalysator (100 ppm, bezogen auf die Menge des herzustellenden Polyetherpolyols) unter Schutzgas (Argon) vorgelegt und unter Rühren auf 105°C aufgeheizt. Anschließend wurde Propylenoxid (ca. 5 g) auf einmal zudosiert, bis der Gesamtdruck auf 2,5 bar angestiegen war. Weiteres Propylenoxid wurde erst dann wieder zudosiert, wenn ein beschleunigter Druckabfall im Reaktor beobachtet wurde. Dieser beschleunigte Druckabfall zeigt an, dass der Katalysator aktiviert ist. Anschließend wurde das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C wurden flüchtige Anteile bei 90°C (1 mbar) abdestilliert und die Reaktionsmischung anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung. Die Gesamtreaktionszeit ist die Summe aus Induktions- und Propoxylierungszeit.

### Beispiel 28

### Herstellung von Polyetherpolyol mit Katalysator I (100 ppm)

| | | |
|---|---|---|
| Induktionszeit | | 251 min |
| Propoxylierungszeit | | 27 min |
| Gesamtreaktionszeit | | 278 min |
| Polyetherpolyol | OH-Zahl (mg KOH/g) | 29,2 |
| | Doppelbindungsgehalt (mMol/kg) | 7 |
| | Viskosität 25°C (mPas) | 871 |

### Beispiel 29

### Herstellung von Polyetherpolyol mit Katalysator III (25 ppm)

| | | |
|---|---|---|
| Induktionszeit | | 126 min |
| Propoxylierungszeit | | 50 min |
| Gesamtreaktionszeit | | 176 min |
| Polyetherpolyol | OH-Zahl (mg KOH/g) | 29,9 |
| | Doppelbindungsgehalt (mMol/kg) | 9 |
| | Viskosität 25°C (mPas) | 878 |

### Beispiel 30

### Herstellung von Polyetherpolyol mit Katalysator IV (25 ppm)

| | | |
|---|---|---|
| Induktionszeit | | 163 min |
| Propoxylierungszeit | | 52 min |
| Gesamtreaktionszeit | | 215 min |
| Polyetherpolyol | OH-Zahl (mg KOH/g) | 30,1 |
| | Doppelbindungsgehalt (mMol/kg) | 7 |
| | Viskosität 25°C (mPas) | 821 |

### Beispiel 31

### Herstellung von Polyetherpolyol mit Katalysator V (100 ppm)

| | |
|---|---|
| Induktionszeit | 165 min |
| Propoxylierungszeit | 10 min |
| Gesamtreaktionszeit | 175 min |

### Beispiel 32

### Herstellung von Polyetherpolyol mit Katalysator VI (100 ppm)

| | |
|---|---|
| Induktionszeit | 160 min |
| Propoxylierungszeit | 10 min |
| Gesamtreaktionszeit | 170 min |

### Beispiel 33

### Herstellung von Polyetherpolyol mit Katalysator VII (100 ppm)

| | |
|---|---|
| Induktionszeit | 240 min |
| Propoxylierungszeit | 5 min |
| Gesamtreaktionszeit | 245 min |

### Beispiel 34

### Herstellung von Polyetherpolyol mit Katalysator VIII (100 ppm)

| | |
|---|---|
| Induktionszeit | 165 min |
| Propoxylierungszeit | 10 min |
| Gesamtreaktionszeit | 175 min |

### Beispiel 35

### Herstellung von Polyetherpolyol mit Katalysator IX (100 ppm)

| | |
|---|---|
| Induktionszeit | 100 min |
| Propoxylierungszeit | 10 min |
| Gesamtreaktionszeit | 110 min |

### Beispiel 36

### Herstellung von Polyetherpolyol mit Katalysator X (100 ppm)

| | |
|---|---|
| Induktionszeit | 150 min |
| Propoxylierungszeit | 10 min |
| Gesamtreaktionszeit | 160 min |

### Beispiel 37

### Herstellung von Polyetherpolyol mit Katalysator XI (100 ppm)

| | |
|---|---|
| Induktionszeit | 155 min |
| Propoxylierungszeit | 10 min |
| Gesamtreaktionszeit | 165 min |

### Beispiel 38

### Herstellung von Polyetherpolyol mit Katalysator XII (100 ppm)

| | |
|---|---|
| Induktionszeit | 320 min |
| Propoxylierungszeit | 5 min |
| Gesamtreaktionszeit | 325 min |

### Beispiel 39

### Herstellung von Polyetherpolyol mit Katalysator XIII (25 ppm)

| | | |
|---|---|---|
| Induktionszeit | | 106 min |
| Propoxylierungszeit | | 43 min |
| Gesamtreaktionszeit | | 149 min |
| Polyetherpolyol | OH-Zahl (mg KOH/g) | 29,3 |
| | Doppelbindungsgehalt (mMol/kg) | 6 |
| | Viskosität 25°C (mPas) | 835 |

### Beispiel 40

### Herstellung von Polyetherpolyol mit Katalysator XIV (100 ppm)

| | |
|---|---|
| Induktionszeit | 205 min |
| Propoxylierungszeit | 5 min |
| Gesamtreaktionszeit | 210 min |

### Beispiel 41

### Herstellung von Polyetherpolyol mit Katalysator XV (100 ppm)

| | |
|---|---|
| Induktionszeit | 320 min |
| Propoxylierungszeit | 10 min |
| Gesamtreaktionszeit | 330 min |

### Beispiel 42

### Herstellung von Polyetherpolyol mit Katalysator XVI (25 ppm)

| | | |
|---|---|---|
| Induktionszeit | | 160 min |
| Propoxylierungszeit | | 43 min |
| Gesamtreaktionszeit | | 203 min |
| Polyetherpolyol | OH-Zahl (mg KOH/g) | 29,5 |
| | Doppelbindungsgehalt (mMol/kg) | 8 |
| | Viskosität 25°C (mPas) | 842 |

### Beispiel 43

### Herstellung von Polyetherpolyol mit Katalysator XVII (100 ppm)

| | |
|---|---|
| Induktionszeit | 265 min |
| Propoxylierungszeit | 5 min |
| Gesamtreaktionszeit | 270 min |

### Beispiel 44

### Herstellung von Polyetherpolyol mit Katalysator XVIII (100 ppm)

| | |
|---|---|
| Induktionszeit | 250 min |
| Propoxylierungszeit | 5 min |
| Gesamtreaktionszeit | 255 min |

### Beispiel 45

### Herstellung von Polyetherpolyol mit Katalysator XIX (100 ppm)

| | |
|---|---|
| Induktionszeit | 105 min |
| Propoxylierungszeit | 10 min |
| Gesamtreaktionszeit | 115 min |

### Beispiel 46

### Herstellung von Polyetherpolyol mit Katalysator XX (100 ppm)

| | |
|---|---|
| Induktionszeit | 265 min |
| Propoxylierungszeit | 5 min |
| Gesamtreaktionszeit | 270 min |

### Beispiel 47

### Herstellung von Polyetherpolyol mit Katalysator XXI (100 ppm)

| | |
|---|---|
| Induktionszeit | 135 min |
| Propoxylierungszeit | 5 min |
| Gesamtreaktionszeit | 140 min |

### Beispiel 48

### Herstellung von Polyetherpolyol mit Katalysator XXII (100 ppm)

| | |
|---|---|
| Induktionszeit | 135 min |
| Propoxylierungszeit | 10 min |
| Gesamtreaktionszeit | 145 min |

### Beispiel 49 (Vergleich)

### Herstellung von Polyetherpolyol mit Katalysator XXIII (100 ppm)

| | | |
|---|---|---|
| Induktionszeit | | 133 min |
| Propoxylierungszeit | | 50 min |
| Gesamtreaktionszeit | | 183 min |
| Polyetherpolyol | OH-Zahl (mg KOH/g) | 30,0 |
| | Doppelbindungsgehalt (mMol/kg) | 6 |
| | Viskosität 25°C (mPas) | 845 |

### Beispiel 50 (Vergleich)

### Herstellung von Polyetherpolyol mit Katalysator XXIV (25 ppm)

| | | |
|---|---|---|
| Induktionszeit | | 99 min |
| Propoxylierungszeit | | 110 min |
| Gesamtreaktionszeit | | 209 min |
| Polyetherpolyol | OH-Zahl (mg KOH/g) | 29,9 |
| | Doppelbindungsgehalt (mMol/kg) | 10 |
| | Viskosität 25°C (mPas) | 862 |

### Beispiel 51 (Vergleich)

### Herstellung von Polyetherpolyol mit Katalysator XXV (25 ppm)

| | | |
|---|---|---|
| Induktionszeit | | 154 min |
| Propoxylierungszeit | | 37 min |
| Gesamtreaktionszeit | | 191 min |
| Polyetherpolyol | OH-Zahl (mg KOH/g) | 30,7 |
| | Doppelbindungsgehalt (mMol/kg) | 7 |
| | Viskosität 25°C (mPas) | 809 |

### Beispiel 52 (Vergleich)

### Herstellung von Polyetherpolyol mit Katalysator XXVI (25 ppm)

| | | |
|---|---|---|
| Induktionszeit | | 130 min |
| Propoxylierungszeit | | 150 min |
| Gesamtreaktionszeit | | 280 min |
| Polyetherpolyol | OH-Zahl (mg KOH/g) | 29,5 |
| | Doppelbindungsgehalt (mMol/kg) | 5 |
| | Viskosität 25°C (mPas) | 861 |

### Beispiel 53 (Vergleich)

### Herstellung von Polyetherpolyol mit Katalysator XXVII (25 ppm)

| | | |
|---|---|---|
| Induktionszeit | | 217 min |
| Propoxylierungszeit | | 33 min |
| Gesamtreaktionszeit | | 250 min |
| Polyetherpolyol | OH-Zahl (mg KOH/g) | 29,6 |
| | Doppelbindungsgehalt (mMol/kg) | 6 |
| | Viskosität 25°C (mPas) | 855 |

## Patentansprüche

1. Doppelmetallcyanid (DMC)-Katalysator enthaltend
a) eine oder mehrere Doppelmetallcyanid-Verbindungen,
b) einen organischen Komplexliganden, der weder ein Polyether, Polyester, Polycarbonat, Polyalkylenglykolsorbitanester, Polyalkylenglykolglycidylether, Polyacrylamid, eine Poly(acrylamid-co-acrylsäure), Polyacrylsäure, Poly(acrylsäure-co-maleinsäure), ein Polyacrylnitril, Polyalkylacrylat, Polyalkylmethacrylat, Polyvinylmethylether, Polyvinylethylether, Polyvinylacetat, Polyvinylalkohol, Poly-N-vinylpyrrolidon, eine Poly(N-vinylpyrrolidon-co-acrylsäure), ein Polyvinylmethylketon, Poly(4-vinylphenol), Poly(acrylsäure-costyrol), Oxazolinpolymer, Polyalkylenimin, Maleinsäure- oder Maleinsäureanhydridcopolymer, eine Hydroxyethylcellulose, ein Polyacetal, Glycidylether, Glycosid, Carbonsäureester mehrwertiger Alkohole, eine Gallensäure oder ein Gallensäuresalz, Gallensäureeste oder Gallensäureamid, Cyclodextrin, eine Phosphorverbindung, ein α,β-ungesättigter Carbonsäureester noch eine ionische oberflächen- bzw. grenzflächenaktive Verbindungen ist,
c) zwei unterschiedliche komplexbildende Komponenten, ausgewählt jeweils aus der Gruppe umfassend: Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(Nvinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetale, Glycidylether, Glycoside, Carbonsäureester mehrwertiger Alkohole, Gallensäuren und deren Salze, Ester oder Amide, Cyclodextrine, Phosphorverbindungen, α,β-ungesättigte Carbonsäureester und ionische oberflächen- bzw. grenzflächenaktive Verbindungen, wobei jede Komponente einer anderen Verbindungsklasse aus der genannten Gruppe angehört.

2. DMC-Katalysator nach Anspruch 1, zusätzlich enthaltend d) Wasser und/oder e) wasserlösliches Metallsalz.

3. DMC-Katalysator nach Anspruch 1, worin die Doppelmetallcyanid-Verbindung Zinkhexacyanocobaltat(III) ist.

4. DMC-Katalysator nach einem der Ansprüche 1 bis 3, worin der organische Komplexligand tert.-Butanol ist.

5. DMC-Katalysator nach einem der Ansprüche 1 bis 4, worin der Katalysator 1 bis 80 Gew.-% einer Mischung der komplexbildenden Komponenten c) enthält.

6. Verfahren zur Herstellung eines DMC-Katalysators, enthaltend die Schritte
i) Umsetzung in wässriger Lösung von
α) Metallsalzen mit Metallcyanidsalzen
β) organischen Komplexliganden, die weder funktionalisierte Polymere, Glycidylether, Glycoside, Carbonsäureester mehrwertiger Alkohole, Gallensäuren oder deren Salze, Ester oder Amide, Cyclodextrine, Phosphorverbindungen, α,β-ungesättigte Carbonsäureester noch ionische oberflächen- bzw. grenzflächenaktive Verbindungen sind, und
γ) zwei unterschiedlichen komplexbildenden Komponenten, ausgewählt jeweils aus der Gruppe umfassend: Polyether, Polyester, Polycarbonate, Polyalkylenglykolsorbitanester, Polyalkylenglykolglycidylether, Polyacrylamid, Poly(acrylamid-coacrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetale, Glycidylether, Glycoside, Carbonsäureester mehrwertiger Alkohole, Gallensäuren und deren Salze, Ester oder Amide, Cyclodextrine, Phosphorverbindungen, α,β-ungesättigte Carbonsäureester und ionische oberflächen- bzw. grenzflächenaktive Verbindungen, wobei jede Komponente einer anderen Verbindungsklasse aus der genannten Gruppe angehört,
ii) Isolieren, Waschen und Trocknen des in Schritt i) erhaltenen Katalysators.

7. Verfahren zur Herstellung von Polyetherpolyolen durch Polyaddition von Alkylenoxiden an aktive Wasserstoffatome aufweisende Starterverbindungen, in Gegenwart eines oder mehrerer DMC-Katalysatoren nach einem der Ansprüche 1 bis 5.

8. Polyetherpolyol, herstellbar nach dem Verfahren gemäß Anspruch 7.

9. Verwendung eines oder mehrerer DMC-Katalysatoren nach einem der Ansprüche 1 bis 5, zur Herstellung von Polyetherpolyolen durch Polyaddition von Alkylenoxiden an aktive Wasserstoffatome aufweisende Starterverbindungen.
